# EUROPÄISCHE PATENTSCHRIFT

(11) **EP 2 950 068 B1**
(45) Veröffentlichungstag und Bekanntmachung des Hinweises auf die Patenterteilung: **12.07.2017**
(21) Anmeldenummer: 15169938.6
(22) Anmeldetag: 29.05.2015
(51) Int. Cl.: G01K 1/14

(54) **TEMPERATURSENSOR**
TEMPERATURE SENSOR
SONDE DE TEMPERATURE

(30) Priorität: 30.05.2014 DE 102014107645
(43) Veröffentlichungstag der Anmeldung: 02.12.2015
(73) Patentinhaber: Steinfurth Mess-Systeme GmbH, 45309 Essen (DE)
(72) Erfinder: Falkenstein, Martin, 44795 Bochum (DE)
(74) Vertreter: Bals, Rüdiger

(56) Entgegenhaltungen:
- WO-A2-2004/090492
- DE-A- 3 346 565
- US-A1- 2002 018 401

## Beschreibung

Die vorliegende Erfindung betrifft ein Temperatursensorsystem für die Getränke- bzw. Verpackungsindustrie nach Anspruch 1. Weiterhin ist Gegenstand der Erfindung eine Messvorrichtung nach Anspruch 9.

Es ist allgemein bekannt, dass sowohl der Geschmack als auch die Haltbarkeit von Getränken, wie bspw. von Bieren, Limonaden oder Softdrinks, entscheidend vom Kohlendioxidgehalt in diesen Getränken beeinflusst wird. Folglich ist es notwendig den vorhandenen Kohlendioxidgehalt in den Behältnissen exakt bestimmen zu können. Aus dem Stand der Technik ist bekannt, dass die Bestimmung der Konzentration des Kohlendioxids im Behältnis bspw. dadurch indirekt erfolgen kann, dass im Behältnis der Druck und die Temperatur gemessen werden, nachdem ein Gleichgewichtszustand zwischen Gas- und Flüssigkeitsphase erzielt wurde. Bisher wurde für diese Messung ein Temperatursensor verwendet, der in einem Metallrohr angeordnet und mit diesem fest verbunden war. Nachteilig hierbei ist jedoch, dass die Temperatur des gesamten Metallrohrs auf den Sensor übertragen wurde. Somit musste einerseits eine große Masse erwärmt bzw. abgekühlt werden und andererseits strahlten somit auch die Temperaturen von Teilen der Messeinrichtung, die für die eigentlichen Messung irrelevant waren, über den ausstehenden Teil des Metallrohrs auf den Temperatursensor, so dass eine exakte Temperaturmessung innerhalb des Behältnisses schwierig ist. Ferner ist bei den bekannten Vorrichtungen der Nachteil, dass der Sensor beim Einstechen in das Behältnis oftmals beschädigt wurde, da sich das Metallrohr bzw. der Temperatursensor beim Einstechen verbog, wodurch diese ausgetauscht werden mussten.

DE 33 46 565 A1 offenbart einen Temperaturfühler, der eine Hülse umfasst. Die Hülse ist aus schlecht wärmeleitendem Material ausgebildet.

Die Aufgabe der vorliegenden Erfindung besteht daher darin, ein Temperatursensorsystem sowie eine Messvorrichtung zu schaffen, welche eine exakte Temperaturmessung innerhalb von Behältnissen gewährleisten und zudem eine ausreichend hohe mechanische Stabilität aufweisen.

Gelöst wird diese Aufgabe durch ein Temperatursensorsystem mit den Merkmalen des Anspruchs 1 sowie eine Messvorrichtung mit den Merkmalen des Anspruchs 9. Vorteilhafte Ausgestaltungen sind jeweils Gegenstand der abhängigen Ansprüche. Es ist darauf hinzuweisen, dass die in den Patentansprüchen einzeln aufgeführten Merkmale auch in beliebiger und technologisch sinnvoller Weise miteinander kombiniert werden können und somit weitere Ausgestaltungen der Erfindung aufzeigen. Die erfindungsgemäße Messvorrichtung kann dabei auch mit dem erfindungsgemäßen Temperatursensorsystem ausgestaltet sein.

Ein erfindungsgemäßes Temperatursensorsystem für die Getränke- und/oder Verpackungsindustrie weist zumindest ein Rohr mit einem ersten und einem zweiten Ende auf, wobei das Rohr eine niedrige Wärmeleitfähigkeit hat. Das Rohr weist kohlenstofffaserverstärkten Kunststoff auf. Ferner weist das Temperatursensorsystem einen Temperatursensor auf, der im Inneren des Rohrs angeordnet ist. Vorteilhafterweise befindet sich der Temperatursensor im Bereich des ersten Endes des Rohrs. Des Weiteren weist das erfindungsgemäße System ein wärmeleitfähiges Element auf, welches an einer Öffnung des ersten Endes des Rohrs angeordnet ist.

Die erfindungsgemäße Temperatursensoranordnung hat gegenüber dem Stand der Technik den Vorteil, dass durch die Verwendung eines Rohrs mit einer niedrigen Wärmeleitfähigkeit auf der einen Seite und einem wärmeleitfähigen Element an der Öffnung des Rohrs auf der anderen Seite, die Temperatur des Behälterinnenraums punktuell und genau gemessen werden kann. Als niedrige Wärmeleitfähigkeit wird ein Wert unter 12 W/(m*K) verstanden, bevorzugt ein Wert unter 5 W/(m*K) und besonders bevorzugt ein Wert unter 1 W/(m*K). Bei dem bekannten Stand der Technik misst der Temperatursensor einen verfälschten Wert, da auch die Elemente des Temperatursensorsystems bzw. der Messvorrichtung das Ergebnis der Messung der Temperatur beeinflussen und somit die eigentlich im Behältnis vorliegende Temperatur verfälschen können.

Bei dem Temperatursensor kann es sich um einen Keramikchip handeln, der einen Durchmesser von etwa 1 mm, bevorzugt etwa 0,8 mm aufweist. Ferner weist der Sensor bevorzugt eine Länge von etwa 3 mm, besonders bevorzugt etwa 2 mm auf. Der Sensor kann mit einer Platinbeschichtung ausgestaltet sein, der einen Messwert bzw. Messwertbereich von ca. 100 Ω bzw. 1.000Ω aufweist. Es ist auch denkbar, dass der Sensor künstlich gealtert worden ist, wodurch erreicht wird, dass über das Alter des Sensors keine Messschwankungen mehr auftreten und somit eine Nachjustierung bspw. in elektronischer, messtechnischer Art nicht mehr erforderlich ist.

Das Rohr weist bevorzugt eine hohe Festigkeit und/oder Steifigkeit auf. So wird verhindert, dass sich das Rohr beim Anstechvorgang verformt und der darin liegende Temperatursensor beschädigt wird. Idealerweise kann das Rohr aus einem Material sein, das eine hohe gewichtsspezifische Festigkeit und/oder Steifigkeit aufweist. Dies bietet den Vorteil, dass das Temperatursensorsystem bei einem geringen Bauvolumen eine hohe Steifigkeit und/oder Festigkeit aufweist. Folglich kann das Temperatursensorsystem auch bei der Temperaturmessung in Verpackungen bzw. Getränkebehältnissen benutzt werden, wo nur ein geringes Bauvolumen zur Verfügung steht. Insbesondere ist dies im Bereich von Flaschenhälsen der Fall.

Das erfindungsgemäße Rohr weist einen Faserverbundwerkstoff auf. Der Vorteil von Faserverbundwerkstoffen ist, dass über eine Vielzahl von Parametern die mechanischen bzw. thermischen Eigenschaften dieser Stoffe leicht eingestellt werden können. Neben der Faser-Matrix-Kombination können bspw. der Faserwinkel, der Faservolumenanteil, die Schichtreihenfolge und vieles mehr variiert werden. Bevorzugt handelt es sich bei dem Rohr um ein Rohr aus einem Faser-Kunststoff-Verbund, besonders bevorzugt aus einem kohlefaserverstärkten Kunststoff. Der Vorteil hierbei ist, dass diese Rohre über eine besonders hohe Stabilität und eine schlechte Wärmeleitfähigkeit verfügen. Die Matrix des kohlefaserverstärkten Kunststoffs weist bevorzugt Duromere, z. B. Epoxidharz oder Phenolharze, auf. Sie kann aber auch aus Thermoplasten sein. Denkbar ist aber auch, dass das Rohr aus einem keramischen Faserverbundwerkstoff ist.

Das wärmeleitfähige Element kann vorteilhafterweise Silber aufweisen. Dadurch, dass Silber eine sehr gute wärmeleitfähige Eigenschaft aufweist, kann hierdurch gewährleistet werden, dass der Temperatursensor, der im Inneren des Rohrs angeordnet ist, die zu messende Temperatur auch ohne wesentliche Messfehler erfasst. Vorteilhafterweise handelt es sich bei dem wärmeleitfähigen Element um eine Legierung aus Silber bzw. es enthält neben Silber noch Zusatzstoffe. Dies bietet den Vorteil, dass ein solches wärmeleitfähiges Element gegenüber einem Element aus reinem Silber härter ist, gegenüber Umwelteinflüssen resistenter ist und zudem anlaufbeständig ist. Läuft das Silber mit der Zeit an, verschlechtert sich die Wärmeleitfähigkeit des Elements und die zu messende Temperatur könnte nicht mehr bestmöglich auf den Temperatursensor übertragen werden. Die Messungen würden fehlerhaft werden. Es ist aber auch denkbar, dass das wärmeleitfähige Element aus einem anderen Metall, wie bspw. Kupfer, Gold oder Aluminium bzw. aus einer anderen wärmeleitfähigen Legierung ist.

Das wärmeleitfähige Element weist vorteilhafterweise einen Durchmesser auf, der wenigstens den Durchmesser der Öffnung des Rohrs entspricht. Bevorzugt weist es aber einen Durchmesser auf, der dem Außendurchmesser des Rohrs entspricht. Hierdurch wird verhindert, dass das Rohr am Ende ausfranzen kann.

Das wärmeleitfähige Element kann plättchenförmig ausgebildet sein. Bevorzugt handelt es sich bei dem wärmeleitfähigen Element um ein bolzen- bzw. stiftförmiges Element, das von der Öffnung des Rohrs in das Rohrinnere ragt. Dies bietet den Vorteil, dass das Element, durch seine längliche Ausdehnung, die an der Öffnung des Rohrs herrschende Temperatur auf die Rohrinnenseite, wo sich der Temperatursensor befindet, überträgt. Besonders bevorzugt ist das wärmeleitfähige Element nietförmig ausgebildet. Ein solches Element weist einen länglichen Körper mit einem verdickten Ende auf. Das Ende kann dabei bspw. halbrund oder flachrund ausgebildet sein. Durch eine nietförmige Ausgestaltung, weist das wärmeleitfähige Element im Bereich der Öffnung des Rohrs eine größtmögliche Ausdehnung auf, wodurch die zu messende Temperatur vom wärmeleitfähigen Element optimal erfasst werden kann.

Innerhalb des Temperatursensorsystems kann das wärmeleitfähige Element den Temperatursensor berühren, so dass die zu messende Temperatur direkt an den Temperatursensor übertragen wird. Denkbar ist auch, dass das wärmeleitfähige Element und/oder der Temperatursensor mit einem Kleber mit dem Rohr verbunden sind. Hierdurch wird gewährleistet, dass die Bauteile auch bei Erschütterungen bzw. Bewegungen des Sensorsystems an ihrem Platz bleiben. Idealerweise sind das wärmeleitfähige Element und der Temperatursensor mit einem Kleber mechanisch miteinander verbunden. Hierzu eignet sich besonders gut ein wärmeleitfähiger Kleber. Hierdurch kann eine Temperaturübertragung bestmöglich erzielt wird. Bei dem wärmeleitfähigen Kleber kann es sich um Epoxid- bzw. Silikonprodukte, wie bspw. ein warmhärtendes 1-Komponenten-Silikon oder einen 2-Komponenten-Epoxidharz-Klebstoff, handeln. Denkbar ist aber auch, dass der wärmeleitfähige Kleber Metallpartikel aufweist.

Das erfindungsgemäße Temperatursensorsystem kann im Bereich des zweiten Endes des Rohrs wenigstens ein Verbindungselement aufweisen. Durch dieses Verbindungselement ist es möglich das Sensorsystem bspw. an einer Messvorrichtung anzuordnen. Als Verbindungselemente sind solche Elemente vorstellbar, mit denen lösbare Verbindungen, bevorzugt form- oder kraftschlüssige, hergestellt werden können. Bevorzugt kann das Verbindungselement wenigstens ein Gewinde, besonders bevorzugt ein Außengewinde, aufweisen. Denkbar ist auch, dass das Verbindungselement derart ausgestaltet ist, dass es ein Teil eines Bajonettverschlusses ist. Das Verbindungselement weist dabei wenigstens einen Knopf auf. Durch diesen wenigstens einen Knopf kann das Temperatursensorsystem mit dem anderen Teil des Bajonettverschlusses, der wenigstens einen Längsschlitz und einen daran anschließenden kurzen Querschlitz aufweist, verbunden werden. Vorstellbar ist auch, dass das Verbindungselement wenigstens einen Schlitz aufweist, worin ein Knopf des anderen Teils des Bajonettverschlusses eingeführt werden kann. Das Verbindungselement kann aber auch senkrecht zu einer Steckrichtung an einer Verbindungsstelle längliche Erhebungen, die nicht rundum laufen, sondern unterbrochen sind, wie sie bspw. auch bei Kamerawechselobjektiven vorhanden sind, aufweisen.

Das Verbindungselement kann Teil des Rohrs sein. Es kann aber auch ein separates Bauteil sein. Handelt es sich um ein separates Bauteil, so wird dieses bevorzugt form- oder stoffschlüssig, bspw. durch einen Klebstoff, mit dem Rohr verbunden. Das separate Verbindungselement kann eine Bohrung aufweisen, in die das Rohr eingeschoben wird. Bevorzugt weist das Verbindungselement eine Stufen- und/oder eine Sacklochbohrung auf. Dies bietet den Vorteil, dass das zweite Ende des Rohrs von dem Verbindungselement geschützt wird und ein Ausfranzen des Rohrs verhindert wird.

Ferner ist die vorliegende Erfindung auch auf eine Messvorrichtung gemäß Anspruch 9 gerichtet. Die erfindungsgemäße Messvorrichtung weist einen Messkopf, zumindest ein erfindungsgemäßes Temperatursensorsystem, eine mechanische Aufnahme, ein Anstechmittel und eine Auswerteeinheit auf.

Durch das Anstechmittel kann ein Behältnis, das sich in einer mechanischen Aufnahme befindet bzw. dessen Deckel, durchstochen werden. Hierdurch ist es möglich, dass die Temperatur im Inneren des Behältnisses direkt gemessen werden kann, da das Temperatursensorsystem nach dem Anstechen innerhalb des Behältnisses angeordnet werden kann. Bevorzugt ist das Anstechmittel angeschrägt. Dies bietet den Vorteil, dass das Behältnis mit relativ wenig Kraft durchstochen werden kann und zudem ein genaues und punktuelles Anstechen des Behältnisses gewährleistet werden kann. Das Anstechmittel ist bevorzugt aus einem harten Werkstoff. Es ist auch denkbar, dass es sich bei dem Anstechmittel um eine Nadel handelt. Idealerweise ist das Anstechmittel ein hohler Körper, bspw. ein Rohr.

Des Weiteren kann das erfindungsgemäße Temperatursensorsystem innerhalb des Anstechmittels angeordnet sein. Vorteilhaft hierbei ist unter anderem, dass während des Anstechvorgangs das Temperatursensorsystem geschützt im Anstechmittel angeordnet ist und eine Beschädigung des Sensorsystems verhindert wird. Bevorzugt ist das Temperatursensorsystem etwas schmaler als der Durchmesser des Hohlraums des Anstechmittels und berührt dieses im Wesentlichen oder überhaupt nicht. Somit wird auch eine Temperaturübertragung vom Anstechmittel auf den Temperatursensor zuverlässig vermieden.

Idealerweise sind das Temperatursensorsystem und das Anstechmittel relativ beweglich zueinander angeordnet. Bei einer derartigen Anordnung liegt beim Anstechvorgang das Temperatursensorsystem vollständig geschützt innerhalb des Anstechmittels. Nachdem der Anstechvorgang beendet ist, wird das Sensorsystem durch einen Bewegungsmechanismus entweder aus dem Anstechmittel herausgeschoben oder das Anstechmittel wird eingezogen. Denkbar ist auch, dass sowohl das Anstechmittel eingezogen als auch das Sensorsystem herausgeschoben wird. Im Ergebnis ragt das Sensorsystem dann über das Anstechmittel heraus und steht in einem direkten Kontakt mit der zu messenden Materie. Vorteilhaft bei der direkten Temperaturmessung ist, dass lediglich die Temperatur des zu prüfenden Mediums erfasst wird und eine Beeinflussung des Messergebnisses durch Einflüsse aus der Messumgebung eine möglichst untergeordnete Rolle spielen, wodurch Messfehler gering ausfallen und der Sensor die im zu prüfenden Medium herrschende Temperatur bestgenau wiedergibt.

Denkbar ist, dass die mechanische Aufnahme mit einem Dreh- und/oder Schwenkmechanismus ausgestattet ist. Durch einen derartigen Mechanismus kann das Behältnis geschüttelt werden, um somit einen Gleichgewichtszustand zwischen der Gas- und Flüssigkeitsphase innerhalb des Behälters zu erreichen und damit eine exakte Probemessung erzielen zu können.

Ferner kann das Anstechmittel Mittel aufweisen, mit denen der Druck, der innerhalb des Behältnisses herrscht, gemessen werden kann. Hierfür ist es denkbar, dass das Anstechmittel am Ende mindestens eine Querbohrung aufweist, über die der Gasdruck im Behältnis gemessen werden kann.

Das Anstechmittel kann an dem Messkopf angeordnet sein. Das Anstechmittel kann dabei fest und unnachgiebig im Messkopf fixiert sein, aber auch relativ beweglich durch einen Bewegungsmechanismus zu dem Messkopf sein. Die relative Beweglichkeit des Anstechmittels zu dem Messkopf bietet den Vorteil, dass hierdurch bspw. nach dem Anstechvorgang das Anstechmittel in den Messkopf eingezogen werden kann und somit das Temperatursensorsystem freigelegt wird. Des Weiteren kann auch das Temperatursensorsystem am Messkopf angeordnet sein. Die Verbindung zwischen Temperatursensorsystem und Messkopf kann bevorzugt durch die erfindungsgemäßen Verbindungsmittel hergestellt werden. Es ist ferner denkbar dass das Sensorsystem relativ beweglich zum Messkopf ist.

Idealerweise wird das Behältnis durch das Anstechmittel bzw. durch den Messkopf abgedichtet, so dass während und nach dem Anstechen ein in dem Behältnis herrschender Überdruck und/oder eine im Behältnis befindliche Flüssigkeit nicht entweichen kann. Bevorzugt ist an dem Messkopf eine flexible Membrandichtung angeordnet. Durch diese Membrandichtung wird das angestochene Behältnis abgedichtet. Idealerweise wird die Membrandichtung mit einem Gegendruck auf das Behältnis gedrückt, wodurch eine gasdichte Verbindung hergestellt wird.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung soweit technisch sinnvoll beliebige Kombinationen der technischen Merkmale, die in den Unteransprüchen aufgeführt oder in der Beschreibung als erfindungsrelevant beschrieben sind. Ebenfalls gelten die offenbarten Merkmale aus dem erfindungsgemäßen System auch für die erfindungsgemäße Messvorrichtung. Es zeigen:
- Fig. 1: eine schematische Ansicht eines erfindungsgemäßen Temperatursensorsystems für die Getränke- und/oder Verpackungsindustrie und
- Fig. 2: eine schematische Ansicht einer erfindungsgemäßen Messvorrichtung für die Getränke- und/oder Verpackungsindustrie.

In den beiden Figuren werden für die gleichen technischen Merkmale auch von unterschiedlichen Ausführungsbeispielen der Erfindung die identischen Bezugszeichen verwendet.

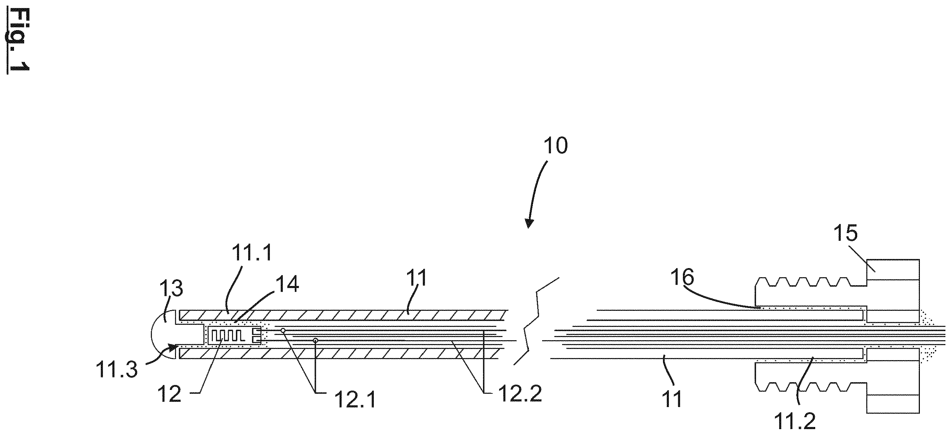

In Fig. 1 ist ein erfindungsgemäßes Temperatursensorsystem 10 für die Getränke- und/oder Verpackungsindustrie in der Seitenansicht schematisch dargestellt. Dabei weist das System 10 ein Rohr 11 auf, das bevorzugt aus kohlenstofffaserverstärktem Kunststoff aufgebaut ist und ein erstes 11.1 und ein zweites Ende 11.2 aufweist. Im Bereich des ersten Endes 11.1 ist im Inneren des Rohrs ein Temperatursensor 12 angeordnet, von dem elektrische Leitungen 12.1 durch das Rohr 11 zur Messvorrichtung 30 abgehen, die jeweils eine Isolation 12.2 aufweisen. Damit die Temperatur des zu prüfenden Stoffes so genau wie möglich von dem Temperatursensor 12 erfasst wird, ist ein wärmeleitfähiges Element 13 an einer Öffnung 11.3 des ersten Endes 11.1 des Rohrs 11 angeordnet. Bevorzugt handelt es sich hierbei um einen Niet 13, besonders bevorzugt weist dieser Silber auf. Der Niet 13 weist einen Außendurchmesser auf, der mindestens dem Außendurchmesser des Rohrs 11 entspricht. Hierdurch wird verhindert, dass sich das Ende des Rohrs 11.2 ausfranzen kann. Sowohl der Niet 13 wie auch der Temperatursensor 12 sind durch einen wärmeleitfähigen Kleber 14 in dem Rohr 11 befestigt. Durch den wärmeleitfähigen Kleber wird zum einen die Positionierung des Temperatursensors 12 und des Niets 13 gewährleistet und zum anderen kann eine Temperaturübertragung zwischen dem Niet 13 und dem Sensor 12 bestmöglich gewährleistet werden. Bei dem Temperatursensor 12 handelt es sich um einen Keramikchip, der bevorzugt einen Durchmesser von etwa 1 mm aufweist.

An dem zweiten Ende 11.2 des Rohrs 11 ist eine Sechskantschraube 15 angeordnet. Die Sechskantschraube 15 weist eine Stufenbohrung 15.1 auf. Die Stufenbohrung bietet den Vorteil, dass das zweite Ende 11.2 von der Sechskantschraube geschützt wird und somit nicht ausfranzen kann. Die Sechskantschraube 15 ist mit einem Kleber 16 an dem Rohr 11 mechanisch verbunden. Durch die Sechskantschraube 15 kann das Temperatursensorsystem 10 an einer Messvorrichtung 30, bevorzugt an einem Messkopf 31 einer Messvorrichtung 30, verbunden werden. Es ist aber grundsätzlich auch denkbar, dass anstelle einer Schraube 15 ein anderes Verbindungsmittel am zweiten Ende 11.2 des Rohrs 11 angeordnet ist. Für eine schnelle Verbindung des Temperatursensorsystems an einer Messvorrichtung 30 eignet sich besonders gut ein Bajonettverschluss. Hierfür kann das Rohr 11 im Bereich des zweiten Endes 11.2 knopfähnliche Elemente aufweisen.

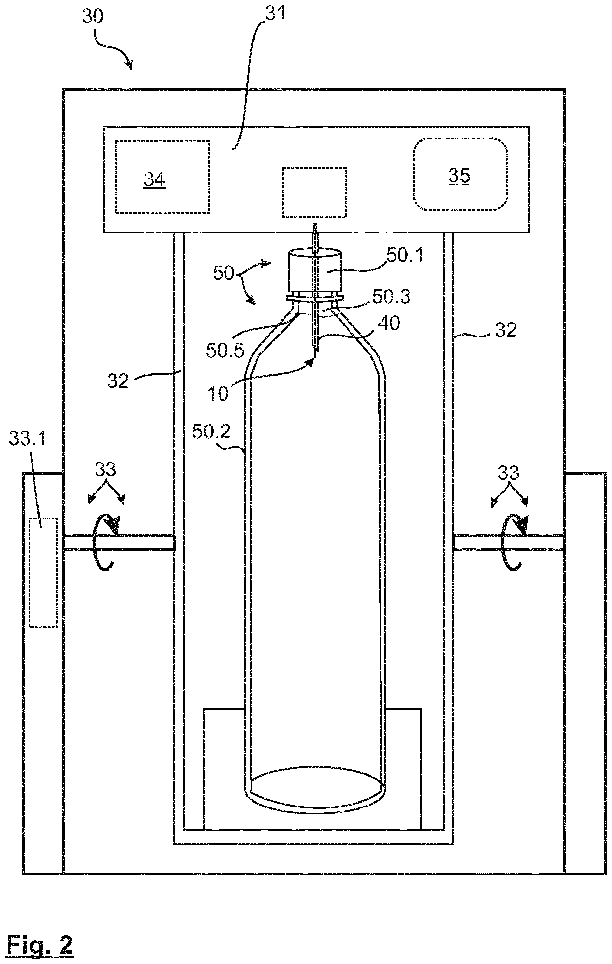

In Fig. 2 ist eine erfindungsgemäße Messvorrichtung 30 für die Getränke- und/oder Verpackungsindustrie schematisch dargestellt. Die Vorrichtung 30 weist eine mechanische Aufnahme 32 für ein Behältnis 50 auf. Bei dem Behältnis 50 handelt es sich bevorzugt um eine Flasche mit einer Wand 50.2, die mit einem Deckel 50.1 verschlossen ist. Innerhalb des Behältnisses 50 befindet sich ein Getränk. Ein Füllstand 50.5 des Getränks ist schematisch angedeutet. Oberhalb des Füllstands 50.5 befindet sich ein Kopfraum 50.3, der üblicherweise mit einem gasförmigen Medium, das bevorzugt CO₂ haltig ist, gefüllt ist.

Die Messvorrichtung weist ferner ein Anstechmittel 40 auf, das an einem Messkopf 31 angeordnet ist. Das Anstechmittel 40 ragt bspw. durch den Deckel 50.1 des Behältnisses 50 bis ins Getränk hinein. Für die Erfindung ist es jedoch ausreichend, wenn das Anstechmittel 40 durch den Deckel 50.1 nur bis in den Kopfraum 50.3 ragt. Des Weiteren befindet sich an dem Messkopf 11 ein erfindungsgemäßes Temperatursensorsystem 10. Das Temperatursensorsystem 10 ist innerhalb des Anstechmittels 40 angeordnet, wobei das Temperatursensorsystem 10 und das Anstechmittel 40 relativ beweglich zueinander sind.

Die Messvorrichtung 30 weist ferner einen Dreh- und/oder Schwenkmechanismus 33 auf, der das Behältnis 50 sicher über die mechanische Aufnahme 32 aufnimmt bzw. fixiert. Bevorzugt wird der Dreh- und/oder Schwenkmechanismus 33 mit einem elektromagnetischen Antrieb 33.1 angetrieben.

Der Messkopf 31, der ebenfalls an dem Dreh- und/oder Schwenkmechanismus 33 befestigt ist, kann zusätzlich über eine Auswerteeinheit 34 sowie eine Anzeige 35 verfügen. Es ist aber auch möglich, dass die Auswerteeinheit 34 und/oder die Anzeige 15 unabhängig von dem Dreh- und/oder Schwenkmechanismus 33 innerhalb der Messvorrichtung 30 stationär angeordnet sind.

### Bezuaszeichenliste

- 10: Temperatursensorsystem
- 11: Rohr
- 11.1: erstes Ende
- 11.2: zweites Ende
- 11.3: Öffnung
- 12: Temperatursensor
- 12.1: Leitung für 12
- 12.2: Isolation von 12.1
- 13: Niet
- 14: Wärmeleitkleber
- 15: Sechskantschraube
- 16: Kleber

- 30: Messvorrichtung
- 31: Messkopf
- 32: mechanische Aufnahme
- 33: Dreh- und/oder Schwenkmechanismus
- 33.1: Antrieb
- 34: Auswerteeinheit
- 35: Anzeige

- 40: Anstechmittel

- 50: Behältnis
- 50.1: Deckel
- 50.2: Wand
- 50.3: Kopfraum
- 50.5: Füllstand

## Patentansprüche

1. Temperatursensorsystem (10) für die Getränke- und/oder Verpackungsindustrie aufweisend folgende Merkmale:
- ein Rohr (11) mit einem ersten (11.1) und einem zweiten Ende (11.2), das eine niedrige Wärmeleitfähigkeit aufweist,
- ein Temperatursensor (12), der im Inneren des Rohrs (11), bevorzugt im Bereich des ersten Endes (11.1) des Rohrs (11), angeordnet ist und
- ein wärmeleitfähiges Element (13), das an einer Öffnung (11.3) des ersten Endes (11.1) des Rohrs (11.1) angeordnet ist, wobei das Rohr (11) kohlenstofffaserverstärkten Kunststoff aufweist.

2. Temperatursensorsystem (10) nach Anspruch 1,
**dadurch gekennzeichnet,**
**dass** das Rohr (11) aus einem Material ist, das eine hohe Festigkeit und/oder Steifigkeit, bevorzugt eine hohe gewichtsspezifische Festigkeit und/oder Steifigkeit aufweist.

3. Temperatursensorsystem (10) nach einem der vorangehenden Ansprüche,
**dadurch gekennzeichnet,**
**dass** das wärmeleitfähige Element (13) Silber aufweist.

4. Temperatursensorsystem (10) nach einem der vorangehenden Ansprüche,
**dadurch gekennzeichnet,**
**dass** das wärmeleitfähige Element (13) nietartig ist und die Öffnung (11.3) des ersten Endes (11.1) des Rohrs (11) verschließt.

5. Temperatursensorsystem (10) nach einem der vorangehenden Ansprüche,
**dadurch gekennzeichnet,**
**dass** der Temperatursensor (12) mit einem wärmeleitfähigen Kleber (14) in dem Rohr (11) befestigt ist.

6. Temperatursensorsystem (10) nach einem der vorangehenden Ansprüche,
**dadurch gekennzeichnet,**
**dass** der Temperatursensor (12) an dem wärmeleitfähigen Element (13) angeordnet ist.

7. Temperatursensorsystem (10) nach einem der vorangehenden Ansprüche,
**dadurch gekennzeichnet,**
**dass** im Bereich des zweiten Endes (11.2) des Rohrs (11) ein Verbindungselement (15) angeordnet ist.

8. Temperatursensorsystem (10) nach dem vorangehendem Anspruch,
**dadurch gekennzeichnet,**
**dass** das Verbindungselement (15) ein Gewinde ist.

9. Messvorrichtung (30) für die Getränke- bzw. Verpackungsindustrie mit den folgenden Merkmalen:
- ein Messkopf (31),
- zumindest ein Temperatursensorsystem (10) nach einem der vorangehenden Ansprüche,
- eine mechanische Aufnahme (32) zur Aufnahme eines Behältnisses (50),
- ein Anstechmittel (40) und
- eine Auswerteeinheit (34).

10. Messvorrichtung (30) nach dem vorangehenden Anspruch,
**dadurch gekennzeichnet,**
**dass** das Temperatursensorsystem (10) innerhalb des Anstechmittels (40) angeordnet ist.

11. Messvorrichtung (30) nach Anspruch 9 oder 10,
**dadurch gekennzeichnet,**
**dass** das Temperatursensorsystem (10) und das Anstechmittel (40) relativ beweglich zueinander angeordnet sind.

12. Messvorrichtung (30) nach Anspruch 9 bis 11,
**dadurch gekennzeichnet,**
**dass** die mechanische Aufnahme (32) mit einem Dreh- und/oder Schwenkmechanismus (33) ausgestattet ist.

13. Messvorrichtung (30) nach einem der Ansprüche 9 bis 12,
**dadurch gekennzeichnet,**
**dass** das Anstechmittel (40) Mittel aufweist, mit denen der Druck gemessen werden kann, der innerhalb des Behältnisses herrscht.

14. Messvorrichtung (30) nach einem der Ansprüche 9 bis 13,
**dadurch gekennzeichnet,**
**dass** das Anstechmittel (40) und/oder das Temperatursensorsystem (10) an dem Messkopf (31) angeordnet ist
und/oder dass am Messkopf (31) eine flexible Membrandichtung angeordnet ist.

## Claims

1. A temperature sensor system (10) for the beverage and/or packing industry, said temperature sensor system having the following features:
- a tube (11) having a first end (11.1) and a second end (11.2), which tube has a low heat conductivity,
- a temperature sensor (12), which is arranged inside the tube (11), preferably in the region of the first end (11.1) of the tube (11), and
- a heat-conductive element (13), which is arranged at an opening (11.3) of the first end (11.1) of the tube (11), wherein the tube (11) comprises carbon fibre-reinforced plastic.

2. The temperature sensor system (10) according to claim 1,
**characterised in that**
the tube (11) is made of a material which has a high strength and/or rigidity, preferably a high weight-specific strength and/or rigidity.

3. The temperature sensor system (10) according to any one of the preceding claims,
**characterised in that**
the heat-conductive element (13) comprises silver.

4. The temperature sensor system (10) according to any one of the preceding claims,
**characterised in that**
the heat-conductive element (13) is rivet-like and closes the opening (11.3) of the first end (11.1) of the tube (11).

5. The temperature sensor system (10) according to any one of the preceding claims,
**characterised in that**
the temperature sensor (12) is secured in the tube (11) by means of a heat-conductive adhesive (14).

6. The temperature sensor system (10) according to any one of the preceding claims,
**characterised in that**
the temperature sensor (12) is arranged on the heat-conductive element (13).

7. The temperature sensor system (10) according to any one of the preceding claims,
**characterised in that**
a connection element (15) is arranged in the region of the second end (11.2) of the tube (11).

8. The temperature sensor system (10) according to the preceding claim,
**characterised in that**
the connection element (15) is a thread.

9. A measuring device (30) for the beverage and/or packing industry, said measuring device having the following features:
- a measuring head (31),
- at least one temperature sensor system (10) according to any one of the preceding claims,
- a mechanical receptacle (32) for receiving a container (50),
- a piercing means (40), and
- an evaluation unit (34).

10. The measuring device (30) according to the preceding claim,
**characterised in that**
the temperature sensor system (10) is arranged inside the piercing means (40).

11. The measuring device (30) according to claim 9 or 10,
**characterised in that**
the temperature sensor system (10) and the piercing means (40) are arranged movably relative to one another.

12. The measuring device (30) according to claim 9 to 11,
**characterised in that**
the mechanical receptacle (32) is equipped with a rotary and/or pivot mechanism (33).

13. The measuring device (30) according to any one of claims 9 to 12,
**characterised in that**
the piercing means (40) comprises means with which the pressure prevailing inside the container can be measured.

14. The measuring device (30) according to any one of claims 9 to 13,
**characterised in that**
the piercing means (40) and/or the temperature sensor system (10) is arranged on the measuring head (31),
and/or **in that** a flexible diaphragm seal is arranged on the measuring head (31).

## Revendications

1. Système de capteur de température (10) pour l'industrie des boissons et/ou du conditionnement, présentant les caractéristiques suivantes:
- un tube (11) avec une première (11.1) et une deuxième extrémité (11.2), qui présente une faible conductibilité thermique,
- un capteur de température (12) qui est disposé à l'intérieur du tube (11), de préférence dans la zone de la première extrémité (11.1) du tube (11), et
- un élément thermoconducteur (13) qui est disposé à une ouverture (11.3) de la première extrémité (11.1) du tube (11.1), le tube (11) présentant une matière plastique renforcée de fibres de carbone.

2. Système de capteur de température (10) selon la revendication 1,
**caractérisé en ce**
**que** le tube (11) est constitué d'un matériau qui présente une résistance mécanique et/ou rigidité élevée, de préférence une résistance mécanique et/ou rigidité spécifique au poids élevée.

3. Système de capteur de température (10) selon l'une des revendications précédentes,
**caractérisé en ce**
**que** l'élément thermoconducteur (13) comporte de l'argent.

4. Système de capteur de température (10) selon l'une des revendications précédentes,
**caractérisé en ce**
**que** l'élément thermoconducteur (13) est du type rivet et ferme l'ouverture (11.3) de la première extrémité (11.1) du tube (11).

5. Système de capteur de température (10) selon l'une des revendications précédentes,
**caractérisé en ce**
**que** le capteur de température (12) est fixé dans le tube (11) avec une colle thermoconductrice (14).

6. Système de capteur de température (10) selon l'une des revendications précédentes,
**caractérisé en ce**
**que** le capteur de température (12) est disposé sur l'élément thermoconducteur (13).

7. Système de capteur de température (10) selon l'une des revendications précédentes,
**caractérisé en ce**
**qu'**un élément de liaison (15) est disposé dans la zone de la deuxième extrémité (11.2) du tube (11).

8. Système de capteur de température (10) selon la revendication précédente,
**caractérisé en ce**
**que** l'élément de liaison (15) est un pas de vis.

9. Dispositif de mesure (30) pour l'industrie des boissons et/ou du conditionnement, présentant les caractéristiques suivantes:
- une tête de mesure (31),
- au moins un système de capteur de température (10) selon l'une des revendications précédentes,
- un élément récepteur mécanique (32) pour la réception d'un récipient (50),
- un moyen de percement (40) et
- une unité d'évaluation (34).

10. Dispositif de mesure (30) selon la revendication précédente,
**caractérisé en ce**
**que** le système de capteur de température (10) est disposé à l'intérieur du moyen de percement (40).

11. Dispositif de mesure (30) selon la revendication 9 ou 10,
**caractérisé en ce**
**que** le système de capteur de température (10) et le moyen de percement (40) sont disposés relativement mobiles l'un par rapport à l'autre.

12. Dispositif de mesure (30) selon l'une des revendications 9 à 11,
**caractérisé en ce**
**que** l'élément récepteur mécanique (32) est équipé d'un mécanisme rotatif et/ou pivotant (33).

13. Dispositif de mesure (30) selon l'une des revendications 9 à 12,
**caractérisé en ce**
**que** le moyen de percement (40) présente des moyens qui permettent de mesurer la pression qui règne à l'intérieur du récipient.

14. Dispositif de mesure (30) selon l'une des revendications 9 à 13,
**caractérisé en ce**
**que** le moyen de percement (40) et/ou le système de capteur de température (10) sont disposés sur la tête de mesure (31) et/ou
**qu'**un joint à membrane flexible est disposé sur la tête de mesure (31).
